Europäisches Patentamt

European Patent Office

Office européen des brevets

(19)

(11) **EP 1 244 165 A2**

(12) # EUROPEAN PATENT APPLICATION

(43) Date of publication:
**25.09.2002 Bulletin 2002/39**

(51) Int Cl.[7]: **H01M 4/96**, H01M 4/88

(21) Application number: **02005354.2**

(22) Date of filing: **14.03.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **19.03.2001 JP 2001078497**
**22.10.2001 JP 2001322927**
**22.10.2001 JP 2001322932**

(71) Applicant: **Ube Industries, Ltd.**
**Ube-Shi, Yamaguchi (JP)**

(72) Inventors:
• **Ohya, Shyusei, Ube Industries, Ltd.**
**Ichihara-shi, Chiba (JP)**

• **Takagi, Jun, Ube Industries, Ltd.**
**Ichihara-shi, Chiba (JP)**
• **Fujii, Yuuichi, Ube Industries, Ltd.**
**Ichihara-shi, Chiba (JP)**
• **Yao, Shigeru, Ube Industries, Ltd.**
**Ichihara-shi, Chiba (JP)**

(74) Representative:
**Forstmeyer, Dietmar, Dr. rer. nat., Dipl.-Chem. et al**
**Boeters & Bauer,**
**Bereiteranger 15**
**81541 München (DE)**

(54) **Electrode base material for fuel cell**

(57) Disclosed are a carbon porous membranous structure having fine interconnecting pores an average diameter of which is 0.05 to 10 μm and a porosity of 15 to 85% and a metal-dispersed carbon structure comprising that carbon porous membranous structure having dispersed therein fine particles of at least one kind of a metal and an alloy. The carbon porous membranous structures are useful as a component of fuel cells, particularly as an electrode base material of gas diffusion electrodes for solid polymer electrolyte fuel cells and phosphoric acid fuel cells.

**EP 1 244 165 A2**

Printed by Jouve, 75001 PARIS (FR)

**Description**

BACKGROUND OF THE INVENTION

Field of the Invention:

The present invention relates to a component of a fuel cell, particularly an electrode base material suitable for making a gas diffusion electrode to be used in fuel cells, such as solid polymer electrolyte fuel cells and phosphoric acid fuel cells, and a fuel cell comprising the base material.

Description of the Related Art:

In recent years fuel cells are being developed and put to practical use. The state-of-the-art fuel cells include a solid polymer electrolyte fuel cell comprising a solid polyelectrolyte layer, a gas diffusion electrode made of a porous carbon fiber plate having a thickness of 0.1 to 0.3 mm made by papermaking technology and having a platinum catalyst supported on the surface thereof as an electrode catalyst which is disposed on both sides of the polyelectrolyte layer, and a dense carbon plate having a thickness of 1 to 3 mm and having gas flow channels on its surface which is disposed on each gas diffusion electrode as a separator; and a phosphoric acid fuel cell comprising an electrolyte layer made of a phosphoric acid holding member in which phosphoric acid is held, a gas diffusion electrode made of a porous carbon fiber plate having a thickness of 0.1 to 0.3 mm made by papermaking technology and having a platinum catalyst supported on the surface thereof which is disposed on both sides of the electrolyte layer, and a separator having a thickness of 1 to 3 mm and having gas flow channels on its surface which is disposed on each gas diffusion electrode. Such fuel cells having platinum catalyst-loaded carbon electrodes are disclosed, e.g., in JP-A-9-153366 and JP-A-2000-215899.

A base material of the gas diffusion electrodes used in the solid polymer electrolyte fuel cells and the phosphoric acid fuel cells is required to have (1) high ability to distribute gases so as to supply a fuel gas and an oxidant gas to reaction sites uniformly and easily and to discharge a drain gas, such as water, easily, (2) excellent electrical and physical properties such as electrical conductivity, thermal conductivity, mechanical strength, and anticorrosion, and (3) small contact resistance when joined with an electrolyte layer and a separator to secure high electrical conductivity through the contact interfaces.

Base materials that have been used in the above-described gas diffusion electrodes include those prepared by impregnating a carbon fiber web made by a papermaking technique with a phenolic resin, etc. and thermally forming the impregnated carbon fiber web into a sheet form by means of a hot press, etc. so that the phenolic resin is carbonized, and the carbon fibers are bound with the carbonized phenolic resin.

The conventional electrode base materials have a porous network structure fabricated of carbon fibers having a diameter of about 7 μm or greater. Therefore, they cannot be seen as satisfactory in uniform gas distribution over a large active area, having liability to allow gas to take a shortcut. Since carbon fibers in these electrode base materials are in point contact with each other, it is difficult to improve electrical and thermal conductivities. When the gas diffusion electrode of this type is combined with an electrolyte layer and separators into a unit cell, every interface also has a point contact, resulting in increased contact resistance and heat loss. It has been suggested to use finer carbon fibers to increase the contact points thereby to reduce the contact resistance. However, an electrode base material made up of fine fibers is apt to undergo fiber cutting and fall-off by the reactant gases or drain gas.

In order for a fuel cell to have high performance with a high power generation efficiency and excellent durability, it is required to have reactant gases distributed uniformly to cause uniform electrode reactions over the entire active area of the electrodes, to reduce the internal resistance of a cell, and to let heat generated from the electrode reactions be dissipated efficiently. To meet these requirements, it has been demanded to develop an electrode base material which is capable of uniform gas distribution, exhibits high electrical and thermal conductivities and, in particular, is successful in reducing the contact resistance or the heat loss in the interfaces.

Powdered carbon materials such as carbon black have hitherto been employed as a carbon carrier supporting a noble metal catalyst. Electrodes which is a constituent component of the reaction site of the solid polymer electrolyte fuel cells have also been prepared from paste comprising noble metal-loaded carbon powder, a binder (e.g., a resin), and a solvent (see, for example, JP-A-5-36418). Starting with a powdered material, however, structural controllability of an electrode to be prepared is limited, which has made it difficult to fabricate a carrier structure with which an expensive noble metal catalyst can be made effective use of.

SUMMARY OF THE INVENTION

A first object of the present invention is to provide an electrode base material for fuel cells which is a carbon membranous structure having a porous structure with specific fine interconnecting pores and a smooth surface on both sides thereof except for the pore openings, which is capable of uniform gas distribution over a large area without allowing gas to take a shortcut, which has high electrical and thermal conductivities, and in particular which involves a reduced contact resistance or a reduced heat loss when assembled into a fuel cell.

A second object of the invention is to provide a metal powder-loaded carbon porous structure, particularly an electrode of fuel cells, and to provide an electrolyte membrane-electrode assembly (hereinafter referred to as MEA) having the metal-loaded carbon porous structure which is capable of controlling transport passages for electrons, reactant gases, and protons and will promise high performance to fuel cells.

The first object of the invention is accomplished by an electrode base material for fuel cells which is a carbon porous membranous structure having fine interconnecting pores an average diameter of which is 0.05 to 10 μm and a porosity of 15 to 85%.

In preferred embodiments of the electrode base material, the carbon membranous structure has a smooth surface on both sides thereof except for pore openings; the carbon membranous structure has a graphitization degree of 20% or more; the carbon membranous structure is obtained by carbonizing a highly heat-resistant porous polymer film having a glass transition temperature of 250 to 600°C by heating in an oxygen-free atmosphere; the carbon membranous structure is obtained by carbonizing a stack of a plurality of the highly heat-resistant porous polymer films by heating in an oxygen-free atmosphere; the highly heat-resistant polymer is a polyimide; and the carbon membranous structure has functional groups bonded to the surface thereof.

The second object of the invention is accomplished by a metal-dispersed carbon porous membranous structure which comprises a carbon porous membranous structure having fine interconnecting pores an average diameter of which is 0.05 to 10 μm and a porosity of 15 to 85%, preferably 25 to 85%, and fine particles of at least one metal or alloy dispersed in the structure.

In preferred embodiments of the metal-dispersed carbon porous membranous structure, the fine particles have an average particle size of 1 to 10 nm; at least one metal or alloy is a noble metal or an alloy containing a noble metal; the carbon porous membranous structure has functional groups bonded to the surface thereof; the metal-dispersed carbon porous membranous structure is obtained by subjecting the functional groups to ion-exchange with at least one kind of metal complex cations and then reducing thereby making the metal fine particles be dispersed in the membranous structure; and the metal complex cations are noble metal complex cations.

The present invention also provides an electrode for fuel cells having the above-described metal-dispersed carbon porous membranous structure.

The present invention further provides an membrane-electrode assembly (MEA) for fuel cells having the above-described electrode for fuel cells as a constituent component.

The present invention furthermore provides a fuel cell having the above-described electrode for fuel cells as a constituent member.

BRIEF DESCRIPTION OF THE DRAWINGS

The present invention will be more particularly described with reference to the accompanying drawings, in which:

Fig. 1 is a scanning electron microscopic photograph (SEM image) taken of the surface of the carbon porous membranous structure prepared in Example 1;
Fig. 2 is an SEM image taken of a section of the carbon porous membranous structure of Fig. 1;
Fig. 3 is an SEM image of the platinum-loaded carbon porous membranous structure prepared in Example 1;
Fig. 4 is a transmission electron microscopic photograph (TEM image) of the platinum-loaded carbon porous membranous structure shown in Fig. 3;
Fig. 5 is a transmission electron diffraction (TED) image of the platinum-loaded carbon porous membranous structure shown in Fig. 3; and
Fig. 6 is an SEM image taken of the surface of the post heat-treated platinum-loaded carbon porous membranous structure prepared in Example 4.

DETAILED DESCRIPTION OF THE PREFERRED EMBODIMENTS

The electrode base material for fuel cells according to the present invention is a carbon membranous structure having a porous structure with fine interconnecting pores. The terminology "interconnecting pores" as used herein are so-called open cells which connect one surface of the membranous structure to the other surface. The substance between adjacent pores serves as a non-porous wall. The interconnecting pores extend from one surface to the other of the structure while winding. Therefore, gas supplied to the membranous structure is guided by the non-linearly extending interconnecting pores serving as passageways and is not allowed to take a shortcut across the surrounding wall.

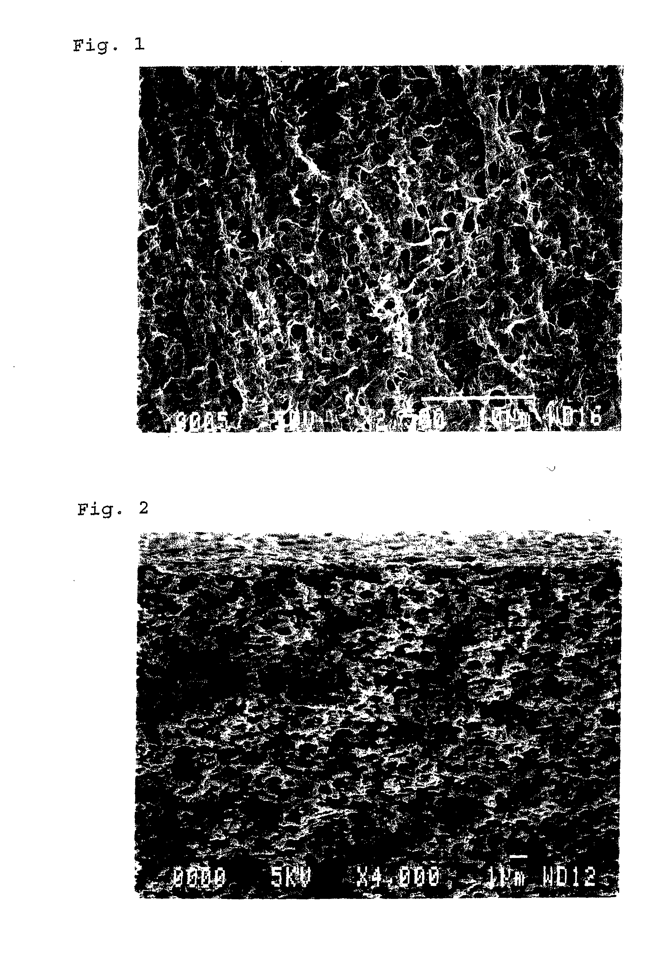

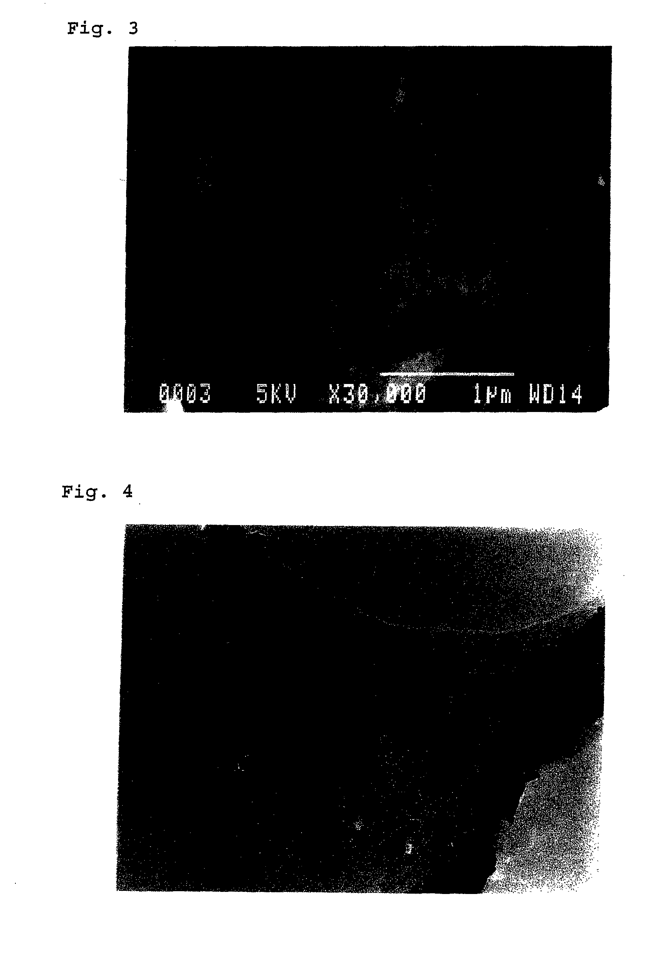

The both sides of the carbon porous membranous structure are flat and smooth except for the end openings of the interconnecting pores. Therefore, when it is joined with other components such as a separator, it provides a planar contact in the interface with the other components. The above-described porous structure and surface smoothness can be recognized from Figs. 1 and 2 showing SEM images of the surface and the section, respectively, of a typical example of the carbon porous membranous structure according to the invention. Having a smooth surface except for the pore openings as shown in Figs. 1 and 2, the carbon porous membranous structure of the invention provides a planar contact in a stack.

The carbon porous membranous structure as an electrode base material has an average pore diameter of 0.05 to 10 μm, preferably 0.05 to 2 μm, on its surface. A surface average pore diameter less than 0.05 μm results in a pressure loss, failing to distribute gas efficiently. If the surface average pore diameter exceeds 10 μm, gas easily flows linearly, and it is difficult to distribute gas evenly over a large area.

The carbon porous membranous structure has a porosity of 15 to 85%, preferably 25 to 85%, still preferably 30 to 70%. The amount of flowing gas is insufficient at a porosity less than 15%. A porosity more than 85% makes the membranous structure mechanically weak.

The carbon porous membranous structure suitably has a graphitization degree of 20% or more, preferably 30% or more, still preferably 50% or more, particularly preferably 60% or more, especially preferably 80% or more, most preferably 90% or more. The structure having a graphitization degree of 20% or more, particularly 50 to 60% or even more exhibits increased mechanical strength and improved flexibility. Electrical and thermal conductivities are also improved.

The carbon porous membranous structure is preferably prepared by carbonizing a highly heat-resistant porous polymer film having fine interconnecting pores and a smooth surface except for the pore openings on both sides thereof by heating in an oxygen-free atmosphere. A highly heat-resistant polymer is capable of retaining its porous structure on heating.

The highly heat-resistant polymer is not particularly limited as long as it is capable of forming a porous film with fine interconnecting pores and retaining such a porous structure after heat carbonization. Suitable polymers include polyimide resins, polyamide resins, cellulosic resins, furfural resins, and phenolic resins. An aromatic polyimide is particularly preferred; for it easily provides a membranous structure of high mechanical strength on heat-carbonization. The term "aromatic polyimide" as used herein is intended to include not only aromatic polyimide in its narrow sense of term but aromatic polyimide precursors, i.e., a polyamic acid and a partially imidated polyamic acid. The aromatic polyimide is preferably one comprising a monomer unit derived from a biphenyltetracarboxylic acid or an anhydride thereof.

The highly heat-resistant polymer preferably has a glass transition temperature of 250 to 600°C.

The highly heat-resistant polymer porous film is prepared conveniently by a so-called phase conversion method using a polymer solution. In a phase conversion method, a solution of a polymer in an organic solvent is cast on a carrier, e.g., a glass plate, and the cast film is immersed in a solvent which is compatible with the organic solvent but incapable of dissolving the polymer (a non-solvent for the polymer, such as an organic solvent or water), whereby the solvent is displaced with the non-solvent to cause phase separation and to form fine pores. A general phase conversion method provides a porous film but with a dense layer on the surface. The porous polymer film as intended in the present invention is preferably prepared by the phase conversion method disclosed in JP-A-11-310658 and JP-A-2000-306568, in which the rate of solvent substitution is controlled by use of a "solvent substitution rate regulating material" to easily obtain a porous film having fine interconnecting pores. JP-A-11-310658 and JP-A-2000-306568 are to be regarded as part of the specification of the present invention.

In some detail, a cast film having smooth surfaces is formed of a polymer solution. A porous film as a "solvent substitution rate regulating material" is superposed on the cast film. The laminate is brought into contact with a non-solvent thereby to precipitate a porous polymer film while forming fine pores through phase separation. The porous polymer film thus prepared maintains the surface smoothness (except for the openings) of the original cast film. Thus there is easily obtained a porous polymer film having interconnecting pores and a smooth surface on both sides thereof except for the pore openings.

The resulting highly heat-resistant porous polymer film is carbonized by heating in an oxygen-free atmosphere to give a carbon porous membranous structure with the specific porous structure and a smooth surface except for the pore openings. The oxygen-free atmosphere is not particularly limited and preferably includes an inert gas (e.g., nitrogen, argon or helium gas) atmosphere and vacuum.

In conducting heat carbonization, an abrupt temperature rise should be avoided. It may result in not only a reduced yield due to scattering of decomposition products and evaporation of carbon content but structural defects.

A suitable rate of temperature rise is 20°C/min or lower, particularly about 1 to 10°C/min, to conduct carbonization slowly. The heating temperature and the heating time are not particularly restricted as is consistent with sufficient carbonization. From the standpoint of increasing the graphitization degree and thereby improving mechanical strength and electrical and thermal conductivities, a preferred temperature range is from 2400 to 3500°C, particularly 2600 to 3000°C, and a suitable heating time is 20 to 180 minutes.

It is desirable to apply pressure during the heating to increase the graphitization degree for obtaining a carbon material with high mechanical strength and high electrical and thermal conductivities. That is, pressure application is effective in suppressing dimensional change accompanying thermal shrinkage and increasing orientation of a portion that is being carbonized to accelerate graphitization. The pressure to be applied is preferably 1 to 250 MPa, still preferably 10 to 250 MPa, particularly preferably 100 to 250 MPa. Pressure application is suitably effected by means of a high-temperature compressor or a hot isostatic press (HIP).

In order to accelerate graphitization, it is preferable to previously add to a polymer solution a compound effective in graphitization acceleration, such as a boron compound. The compound is added in the form of fine powder to the polymer solution to be cast to provide a highly heat-resistant porous polymer film having the compound uniformly dispersed therein.

It is possible but disadvantageous that heat-carbonization is performed for each polymer film, and the resulting carbonized films are stacked to a desired thickness because such a manner of preparation makes an interface between every adjacent films, which needs control of contact resistance, making handling complicated. Applying an adhesive to the interfaces can result in reductions of fuel cell performance. It is conceivable to use a phenolic adhesive, which is heated to carbonize afterward thereby to integrate, but a complicated treatment will be required. To the contrary, it is advantageous that a stack of a plurality of the polymer films is heated in an oxygen-free atmosphere to obtain an integral carbon membranous structure. According to this method, carbon porous membranous structures of various thicknesses made of the same material can be obtained with ease. A carbon porous membranous structure having a pore size gradient in its thickness direction can be produced by this method by stacking porous polymer films different in pore size.

The above-described carbon porous membranous structure, i.e., the electrode base material provides a gas diffusion electrode for fuel cell. The gas diffusion electrode can be produced by, for example, impregnating the base material with a solution containing metal ions or a metal powder precursor, such as a metal complex, by immersion, etc., followed by chemical reduction with a reducing agent to have a catalyst loaded thereon. The metal ions include those of platinum group metals, such as platinum, rhodium, ruthenium, iridium, palladium, and osmium. The metal powder precursor includes platinum group ammine complexes represented by $[M(NH_3)_n]X_m$ (M: platinum group metal; X: Cl or $NO_3$; n: 4 or 6; m: 2, 4 or 6) and platinum group metal chlorides, such as potassium chloroplatinate ($K_2PtCl_4$).

Involving no heat application, the above-mentioned process prevents metal atoms from agglomerating due to diffusion, which is advantageous for supporting catalytic metal particles on the nano level. Metal particles on the nano level are those having a particle size of 100 nm or smaller, preferably 2 to 40 nm.

Where the catalyst is supported in the above-described manner, it is preferable to bond functional groups to the surface of the carbon membranous structure. Useful functional groups include a hydroxyl group, a carboxyl group, and a ketone group, with a hydroxyl group and a carboxyl group being preferred.

While not particularly limiting, the amount of the functional groups to be bonded is preferably 1 to 5 times, particularly 1 to 3 times, a desired loading of the metal (the amount of the supported metal) in case where the metal is to be supported via metal complex ions.

The functional groups can be bonded to the surface of the carbon membranous structure by, for example, oxidation with an acid solvent, treatment with hydrogen peroxide, or high-temperature treatment in air in the presence of steam.

Compared with common carbon fiber sheet prepared by a papermaking technique, the electrode base material of the invention, having a large number of fine interconnecting pores, is capable of supporting a catalyst over a larger surface area to provide catalyst sites distributed broadly and uniformly for electrode reactions, which is advantageous for realizing high-performance fuel cells. The electrode base material of the invention preferably has a surface resistance of 20 Ω/cm or less and a volume resistance of 20 Ω or less

"A volume resistance" as used herein means "a resistance in the thickness direction (between the front and reverse surfaces)".

The metal-dispersed carbon porous membranous structure according to the present invention comprises the above-described carbon porous membranous structure and fine particles of at least one metal or alloy dispersed in the structure.

The fine metal or alloy particles preferably have an average particle size of 1 to 10 nm.

The at least one metal or alloy is preferably a noble metal or an alloy containing a noble metal. The noble metal includes platinum, palladium, and nickel, with platinum being preferred.

The fine metal or alloy particles can be dispersed in the porous carbon membranous structure by, for example, a vapor phase method such as vacuum deposition and a method using a solution of a metal precursor. In the latter method, the carbon membranous structure is soaked in a metal precursor solution and dried as such to support the metal precursor. The metal precursor-loaded structure is then heat-treated in an inert gas atmosphere to reduce the metal precursor to a metal, followed by washing and drying.

The metal precursor solution which can be used is prepared by, for example, dissolving an acetylacetonatoplatinum complex in a water/methanol mixed solvent (1:1 by weight) in a concentration preferably of 0.1 to 5% by weight.

The heat treatment in an inert gas atmosphere is preferably carried out at a temperature of 180 to 1000°C.

The metal-dispersed carbon porous membranous structure is preferably prepared by using the above-described carbon porous membranous structure having functional groups bonded to the surface thereof. In this case, the metal-dispersed carbon porous membranous structure is obtained by subjecting the functional groups to ion-exchange with metal complex cations, followed by reduction. The metal complex cations are preferably noble metal complex cations.

Ion-exchange between the functional groups and the metal complex cations is conducted by, for example, immersing the carbon membranous structure in a solution of a metal complex for an appropriate time, followed by washing with pure water.

Reduction after the ion-exchange can be performed by, for example, chemical reduction or hydrogen reduction. In cases where the ion-exchange has been conducted with noble metal complex cations, the reduction is achieved by heating in an inert gas atmosphere at a temperature above the complex decomposition temperature.

It is preferred for the metal-dispersed carbon porous membranous structure of the present invention to have a surface resistance of 20 $\Omega$/cm or less and a volume resistance of 20 $\Omega$ or less. The metal-dispersed carbon porous membranous structure of the present invention is fit for use as an electrode for fuel cells.

An electrode for fuel cells is prepared by immersing the metal-dispersed carbon porous membranous structure, wherein the metal is, for example, platinum, in a commercially available electrolyte solution, such as Nafion 5012 (perfluorocarbon sulfonic acid polymer solution available from E.I. du Pont de Nemours & Co., Inc.; polymer concentration: 5 wt%; solvent: methanol/isopropyl alcohol/water). Having a large number of fine interconnecting pores, the resulting electrode provides broadly and uniformly dispersed catalyst sites for electrode reactions, which is advantageous as an electrode of high-performance fuel cells.

It is preferred for the electrode for fuel cells to have a surface resistance of 20 $\Omega$/cm or less and a volume resistance of 20 $\Omega$ or less.

The above-described electrode for fuel cells having the metal-dispersed carbon membranous structure provides an MEA for fuel cells. The MEA can be produced in a usual manner. For example, the electrode and a commercially available polymer electrolyte membrane, such as Nafion 117 available from E.I. du Pont, are hot pressed at 120 to 150°C.

The MEA of the present invention is suited to make a fuel cell. The fuel cell can be produced in a convention method. For example, the MEA is sandwiched in between separators commonly employed for fuel cells, such as a carbon plate having fuel gas channels on one side thereof, to make a solid polymer electrolyte fuel cell.

The present invention will now be illustrated in greater detail with reference to Examples, in which an aromatic polyimide is used as a suitable highly heat-resistant polymer. It should be understood, however, that the present invention is not construed as being limited to Examples.

In Examples, air permeance, porosity, average pore size, graphitization degree, and fuel cell performance were evaluated in accordance with the following methods.

(1) Air permeance

Measurement was made in accordance with JIS P8117 with a Gurley Densometer Model B (supplied by Toyo Seiki). A sample membrane was clamped on a circular orifice (diameter: 28.6 mm; area: 645 mm$^2$), and air in a cylinder was made to flow out of the cylinder through the orifice under the load of an inner cylinder weight (567 g). The time required for 100 ml of air to flow was taken as a permeance (Gurley value).

(2) Porosity

The thickness, area and weight of a cut piece of a membrane were measured. Porosity was obtained from the calculated basis weight according to the following equation.

$$\text{Porosity (\%)} = [1-W/(S\,d\,D)] \times 100$$

wherein S is a membrane area; d is a membrane thickness; W is a membrane weight; and D is a density. The density of the aromatic polyimide used was 1.34. The density of a carbon membranous structure was calculated for every sample taking the graphitization degree according to the method hereinafter described into account.

(3) Average pore size

The surface of a sample membrane was photographed under an SEM. The area of at least 50 pore openings was measured to obtain an average pore area. An average circle-equivalent diameter was obtained therefrom according to equation:

$$\text{Average pore size} = 2\,x\,(Sa/\pi)^{1/2}$$

wherein Sa is an average pore area.

(4) Graphitization degree

Measured from an XRD pattern according to Ruland's method.

(5) Evaluation of fuel cell performance

Current-potential characteristics were measured under the following conditions. Fuel gas: hydrogen having a humidity of 70%. Oxidant gas: air. Cell working temperature: 70°C. Pressure difference between reactant gas feed and exhaust: 0.1 kgf/cm$^2$. Measurement was made after the cell was operated for 1 hour in a steady state to confirm sufficient stability of the operation.

EXAMPLE 1

Preparation of polyimide porous film:

3,3',4,4'-Biphenyltetracarboxylic acid dianhydride (s-BPDA) as a tetracarboxylic acid component and p-phenylenediamine (PPD) as a diamine component were dissolved in N-metyl-2-pyrrolidone (NMP) at a PPD:s-BPDA molar ratio of 1: 0.998 to prepare a monomer solution having a total monomer concentration of 10 wt%. The monomer solution was polymerized at 40°C for 10 hours to prepare a polyamic acid solution as a polyimide precursor. The polyamic acid solution had a solution viscosity of 7000 P as measured with a cone-plate viscometer at 25°C.

The polyamic acid solution was cast on a mirror-polished stainless steel plate to a thickness of about 100 μm. The surface of the cast film was covered with a microporous polyolefin film having an air permeance of 550 sec/100 ml (U-Pore UP2015, available from Ube Industries, Ltd.) as a solvent substitution rate regulating material, taking care not to make wrinkles. The laminate was immersed in 2-propanol for 5 minutes, whereby the solvents were exchanged via the solvent substitution rate regulating material to precipitate a polyamic acid film having a porous structure with fine interconnecting pores and a smooth surface except for pore openings.

The resulting polyamic acid film was immersed in water for 15 minutes and then peeled from the stainless steel plate and the solvent substitution rate regulating material, fixed on a pin tentor, and heat-treated in air at 400°C for 30 minutes to obtain a polyimide porous film. The resulting polyimide porous film was found to have a degree of imidation of 70%, a thickness of 30 μm, an air permeance of 200 sec/100 ml, a porosity of 55%, and an average pore size of 0.35 μm. SEM images taken of the surface and the section of the film revealed fine interconnecting pores across the film thickness.

Preparation of carbon porous membranous structure:

The porous polyimide film prepared above was sandwiched in between air-permeable carbon sheets and heated in a nitrogen gas stream at a rate of temperature rise of 10°C/min from 20°C up to 1200°C, at which the film was kept for 120 minutes. After temperature drop, the resulting carbon porous membranous structure (carbonized membrane) was dull and yet glossy and retained the flat outer shape before carbonization with no breakage. The SEM images taken of the surface and the section of the structure are shown in Figs. 1 and 2, respectively. The structure had an average pore size of 0.28 μm, which was smaller than before carbonization, a porosity of 53%, a thickness of 24 μm, and an air permeance of 190 sec/100 ml. An XRD pattern of the structure showed that the carbonized membrane slightly assumed a crystalline phase. The degree of crystallization (the graphitization degree) as obtained by Ruland's method was 28%. It was confirmed that the membranous structure had fine interconnecting pores from an SEM image taken of the section and from the fact that methanol passed through the structure.

Preparation of Pt-loaded carbon porous membranous structure (metal-dispersed carbon membranous structure):

Potassium chloroplatinate ($K_2PtCl_4$) was dissolved in a pure water/methanol mixed solvent (60/40 by weight) in a concentration of 2 wt% to prepare a platinum precursor solution. The platinum precursor solution was put into a petri dish to a height of about 3 mm, and the carbon porous membranous structure prepared above was completely soaked therein. The petri dish was covered with filter paper and allowed to stand in an atmosphere at 20°C and a humidity of 30% for 48 hours. The solvent in the dish evaporated to dryness in 48 hours.

A 2 wt% solution of sodium borohydride ($NaBH_4$) in a pure water/methanol mixed solvent (60/40 by weight) was poured into the petri dish containing the carbon porous membranous structure, and the system was left to stand for 20 minutes to reduce the platinum precursor to platinum. After diluting the solution in the dish with pure water, the carbon porous membranous structure was taken out, washed with pure water, and dried at 90°C in vacuo to obtain a Pt-loaded carbon porous membranous structure.

Characterization:

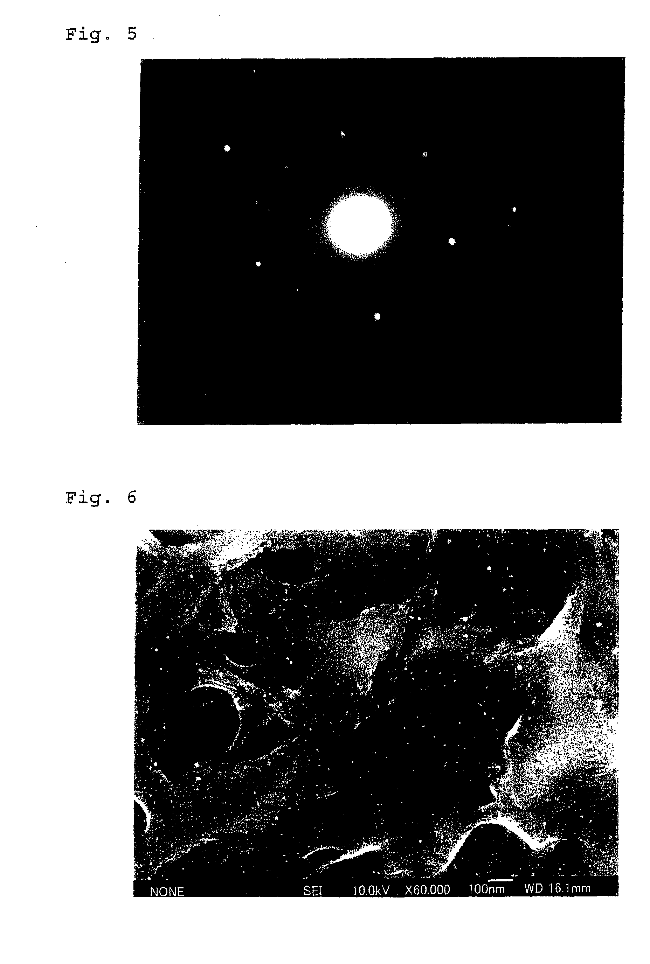

The resulting Pt-loaded carbon porous membranous structure was observed under an SEM. The SEM image is shown in Fig. 3. The white finely dispersed particles in the SEM image were identified to be platinum by electron probe microanalysis (EPMA). Impurity elements other than platinum and carbon in the membranous structure were below the detection limits. As a result of SEM observation, the platinum particles were found dispersed finely and uniformly on the surfaces of the membrane and on the inner walls of the interconnecting pores. The membranous structure was also observed under a TEM. The TEM photograph is shown in Fig. 4. The sample under TEM observation was prepared by grinding the membranous structure in a silicon nitride mortar together with butanol, and the supernatant liquid of the resulting dispersion was poured onto a microgrid for TEM observation having carbon deposited thereon. A transmission electron diffraction (TED) image of the sample is shown in Fig. 5. It is seen from the TED image that the platinum had crystallized. It is also confirmed that the platinum particle size is several tens of nanometers. From these results combined with the procedures taken to prepare the sample for TEM observation, it is obviously recognized that the loaded platinum particles have such adhesion not to separate easily from the supporting carbon conceivably because of certain interaction therebetween.

The electrical resistance of the Pt-loaded carbon porous membranous structure was measured with a two-point contact type tester. The surface resistance and the volume resistance were 7.5 Ω/cm and 3 Ω, respectively.

COMPARATIVE EXAMPLE 1

The electrical resistance of a catalyst-loaded electrode EC-20-10-7 available from ElectroChem, Inc., wherein one side of a carbon paper (TGP-H-090, available from Toray International Industries, Inc.) was coated with a platinum-loaded carbon powder with a binder resin, was measured with a two-point contact type tester. The surface resistance of the platinum-loaded surface and the volume resistance were 30 Ω/cm and 35 to 65 Ω, respectively.

COMPARATIVE EXAMPLE 2

Carbon fiber having a diameter of 7 μm was treated in the same manner as in Example 1 in place of the carbon porous membranous structure in an attempt to support platinum particles thereon. The resulting fiber was observed under an SEM to scarcely find platinum particles. A fluffy substance was found attached to the fibers, which was identified to be a non-reduced platinum precursor as a result of elementary analysis, and the like.

COMPARATIVE EXAMPLE 3

Carbon black having an arithmetic average particle size of 9 nm was treated in the same manner as in Example 1 in place of the carbon porous membranous structure in an attempt to support platinum particles thereon. As a result of SEM observation and EPMA, the resulting carbon black was found to have platinum fine particles and a fluffy non-reduced platinum precursor attached thereon.

EXAMPLE 2

Preparation of polyimide porous film:

s-BPDA as a tetracarboxylic acid component and PPD as a diamine component were dissolved in NMP at a PPD:s-BPDA molar ratio of 1: 0.999 to prepare a monomer solution having a total monomer concentration of 8.5 wt%. The monomer solution was polymerized at 40°C for 15 hours to prepare a polyamic acid solution as a polyimide precursor. The polyamic acid solution had a solution viscosity of 600 P as measured with a cone-plate viscometer at 25°C.

The polyamic acid solution was cast on a mirror-polished stainless steel plate to a thickness of about 100 μm. The surface of the cast film was covered with a microporous polyolefin film having an air permeance of 550 sec/100 ml (U-Pore UP2015, available from Ube Industries, Ltd.) as a solvent substitution rate regulating material, taking care not to form wrinkles. The laminate was immersed in 1-propanol for 7 minutes, whereby the solvents were exchanged via the solvent substitution rate regulating material to precipitate a polyamic acid film having a porous structure with fine interconnecting pores and a smooth surface except for pore openings.

The resulting polyamic acid porous film was immersed in water for 10 minutes and then peeled from the stainless steel plate and the solvent substitution rate regulating material, fixed on a pin tentor, and heat-treated in air at 400°C for 20 minutes to obtain a polyimide porous film. The resulting polyimide porous film had a degree of imidation of 70%, a thickness of 27 μm, an air permeance of 360 sec/100 ml, a porosity of 51%, and an average pore size of 0.17 μm.

Preparation of carbon porous membranous structure and Pt-loaded carbon porous membranous structure (metal-dispersed carbon membranous structure):

The polyimide porous film prepared above was carbonized by heating in an inert gas stream at a rate of temperature rise of 10°C/min from room temperature up to 1400°C, at which the film was kept for 1.5 hours to obtain a carbon porous membranous structure. The structure had a thickness of 22 μm, an air permeance of 350 sec/100 ml, a porosity of 48%, an average pore size of 0.14 μm, and a graphitization degree of 34%.

The carbon porous membranous structure was soaked in a 1 wt% platinum precursor solution prepared by dissolving an acetylacetonatoplatinum complex in a pure water/methanol mixed solvent (1/1 by weight) and allowed to dry at room temperature to prepare a platinum precursor-loaded structure. The structure was heated at 1100°C in an inert gas atmosphere to reduce the platinum precursor, thoroughly washed with a pure water/methanol mixed solvent, and dried to obtain a Pt-loaded carbon porous membranous structure. As a result of SEM and TEM observation, it was confirmed that platinum fine particles had been loaded on the structure. The platinum loading was calculated at 0.02 mg/cm$^2$ from the results of elementary analysis by inductively coupled plasma-atomic emission spectroscopy (ICP-AES), the thickness of the carbon porous membrane, etc.

Preparation of MEA:

The Pt-loaded carbon porous membranous structure was immersed in a commercially available electrolyte solution Nafion 5012 (perfluorocarbon sulfonic acid polymer solution available from Du Pont; polymer concentration: 5 wt%; solvent: methanol/isopropyl alcohol/water) and dried to prepare an electrode having a thin film of Nafion on the surface. The electrode and a commercially available electrolyte membrane Nation 117 (available from Du Pont) were hot-pressed at a temperature of 110 to 150°C to obtain an MEA having an area of 25 cm$^2$.

COMPARATIVE EXAMPLE 4

A commercially available 20 wt% Pt-loaded carbon powder, a commercially available 5 wt% Nafion solution, and a polytetrafluoroethylene (PTFE) dispersion were mixed at a weight ratio of 4:3:2 into paste. The paste was evenly applied to both sides of a commercially available electrolyte membrane Nafion 117 (from E.I. du Pont) at a Pt spread of 0.5 mg/cm$^2$/side and dried at 110°C to obtain an MEA having an area of 25 cm$^2$.

EXAMPLE 3

Each of the MEAs prepared in Example 2 and Comparative Example 4 was assembled into a fuel cell, and the current-potential characteristics of the cell were measured. As a result, the output at 0.35 V was 80 mA/cm$^2$ and 430 mA/cm$^2$, respectively. These results, converted on the basis of unit platinum loadings, correspond to 4000 A/g (Example 2) and 860 A/g (Comparative Example 4). The apparent activity per unit weight of the platinum catalyst of Example 2 is thus estimated at 4.5 times or more that attained in Comparative Example 4.

EXAMPLE 4

The carbon porous membranous structure prepared in Example 2 was immersed in a 0.4 mol/l solution of potassium permanganate in a 35 wt% aqueous nitric acid solution at 70°C for 3 hours to impart functional groups such as a hydroxyl group and a carboxyl group to the surface of the carbon structure. The structure was thoroughly washed with distilled water and dried. The structure was then immersed in an aqueous solution containing 3 g/l of tetraammineplatinum (II) chloride for at least 2 hours to load the structure with a platinum precursor by ion-exchange. The platinum precursor was reduced with an aqueous sodium borohydride solution to obtain a Pt-loaded carbon porous membranous structure (1.6 wt% Pt loading). The Pt-loaded structure was post heat-treated at 1000°C for 1.5 hours in an inert gas atmosphere to adjust the platinum particle size. SEM and TEM observation revealed that the platinum atoms were dispersed uniformly. The SEM image taken of the surface of the post heat-treated Pt-loaded carbon porous membranous structure is shown in Fig. 6.

EXAMPLE 5

A perfluorocarbon sulfonic acid polymer solution Nafion 5012 available from I.E. du Pont (polymer concentration: 5 wt%; solvent: methanol/isopropyl alcohol/water; equivalent weight: 1100) was treated in a vacuum evaporator to remove the main solvent. The precipitated solid polymer was dissolved in a water/N,N-dimethylformamide mixed solvent (1/2 by volume) to prepare a polyelectrolyte solution having a polymer content of 1 wt%. The polyelectrolyte solution was applied to the surface of the post heat-treated Pt-loaded carbon porous membranous structure prepared in Example 4. The resulting electrode having a Nafion coat was hot-pressed onto a commercially available electrolyte membrane Nafion 117 (available from E. I. du Pont) at a temperature of 110 to 130°C to obtain an MEA having an area of 25 cm$^2$. The resulting MEA was assembled into a fuel cell. As a result of performance evaluation, the electrode produced an output of 190 mA/cm$^2$ at 0.35 V.

The present invention produces the following effects. The carbon porous membranous structure as an electrode base material has a porous structure with fine interconnecting pores and a smooth surface except for pore openings on both sides thereof. It is capable of supporting catalytic metal particles at the nano level. Therefore, when assembled into a fuel cell as an electrode base material, it provides a planar contact with other components in a stack to reduce a contact resistance and a heat loss at the interface and allows reactant gases to be evenly distributed over a large area thereby causing catalytic reactions more efficiently.

The metal-dispersed carbon porous membranous structure according to the invention brings about improved electron conductivity when used as an electrode for a fuel cell and thereby reduces the internal resistance of the electrode. As a result, fuel cells of higher performance with greatly reduced polarization compared with those having conventional electrodes can be fabricated.

The metal-dispersed carbon porous membranous structure surely secures passages for electrons, protons and reactant gases to provide an MEA having electrode reaction sites distributed in three dimensions. It brings about marked improvement on apparent activity of an expensive noble metal catalyst. Especially in an oxygen pole it surely secures passages to discharge water produced by a reaction, so that polarization can be greatly reduced. It provides a solid polymer electrolyte fuel cell having a high power generation efficiency per unit area.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

This application claims the priority of Japanese Patent Application Nos. 2001-78497 filed MArch 19, 2001, 2001-322927 filed October 22, 2001 and 2001-322932 filed October 22, 2001, which are incorporated herein by reference.

**Claims**

1. An electrode base material for fuel cells which is a carbon porous membranous structure having fine interconnecting pores an average diameter of which is 0.05 to 10 $\mu m$ and a porosity of 15 to 85%.

2. The electrode base material for fuel cells according to claim 1, wherein said carbon porous membranous structure has a smooth surface except for pore openings on both sides thereof.

3. The electrode base material for fuel cells according to claims 1 or 2, wherein said carbon porous membranous structure has a graphitization degree of 20% or more.

4. The electrode base material for fuel cells according to any one of the preceding claims, wherein said carbon porous membranous structure is obtainable by carbonizing a highly heat-resistant porous polymer film having a glass transition temperature of 250 to 600°C by heating in an oxygen-free atmosphere thereby obtaining an integral structure.

5. The electrode base material for fuel cells according to claim 4, wherein said carbon porous membranous structure is obtainable by carbonizing a stack of a plurality of said highly heat-resistant porous polymer films by heating in an oxygen-free atmosphere thereby integrating.

6. The electrode base material for fuel cells according to claim 4 or 5, wherein said highly heat-resistant polymer is a polyimide.

7. The electrode base material for fuel cells according to claim 6, wherein said polyimide is a polyimide comprising a monomer unit derived from a biphenyltetracarboxylic acid or an anhydride thereof.

8. The electrode base material for fuel cells according to any one of the preceding claims, wherein said carbon porous membranous structure has functional groups bonded to the surface thereof.

9. The electrode base material for fuel cells according to any one of the preceding claims, which has a surface resistance of 20 $\Omega$/cm or less and a volume resistance of 20 $\Omega$ or less.

10. A metal-dispersed carbon porous membranous structure which comprises a carbon porous membranous structure having fine interconnecting pores an average diameter of which is 0.05 to 10 $\mu m$ and a porosity of 15 to 85%, and fine particles of at least one metal or alloy dispersed in said structure.

11. The metal-dispersed carbon porous membranous structure according to claim 10, wherein the porosity is 25 to 85%.

12. The metal-dispersed carbon porous membranous structure according to claims 10 or 11, wherein said fine particles have an average particle size of 1 to 10 nm.

13. The metal-dispersed carbon porous membranous structure according to any one of the preceding claims, wherein said at least one metal or alloy is a noble metal or an alloy containing a noble metal.

14. The metal-dispersed carbon porous membranous structure according to any one of the preceding claims, wherein said carbon porous membranous structure has functional groups bonded to the surface thereof.

15. The metal-dispersed carbon porous membranous structure according to claim 14, wherein said metal-dispersed carbon porous membranous structure is obtainable by subjecting said functional groups to ion-exchange with at least one kind of metal complex cations and then reducing thereby making metal fine particles be dispersed in said carbon porous membranous structure.

16. The metal-dispersed carbon porous membranous structure according to claim 15, wherein said metal complex cations are noble metal complex cations.

17. The metal-dispersed carbon porous membranous structure according to any one of the preceding claims, which has a surface resistance of 20 $\Omega$/cm or less and a volume resistance of 20 $\Omega$ or less.

18. An electrode for fuel cells having the metal-dispersed carbon porous membranous structure according to any one of claims 10 to 17.

19. The electrode for fuel cells according to claim 18, which has a surface resistance of 20 $\Omega$/cm or less and a volume resistance of 20 $\Omega$ or less.

20. An electrolyte membrane-gas diffusion electrode assembly for fuel cells which has the electrode according to claims 18 or 19.

21. A fuel cell having the electrode according to claims 18 or 19.

22. A metal catalyst supported on a carbon structure, wherein said carbon structure is the metal-dispersed carbon porous membranous structure according to any one of claims 10 to 17.

Fig. 1

Fig. 2

Fig. 3

0003    5KV    X30,000      1μm  WD14

Fig. 4

Fig. 5

Fig. 6

NONE    SEI    10.0kV    X60.000    100nm    WD 16.1mm